# EUROPEAN PATENT SPECIFICATION

(11) **EP 0 645 227 B1**
(45) Date of publication and mention of the grant of the patent: **05.08.1998**
(21) Application number: 94810537.4
(22) Date of filing: 19.09.1994
(51) Int. Cl.: B29C 45/26

(54) **Method and apparatus for forming molded article**
Verfahren und Vorrichtung zum Formen eines gegossenen Gegenstandes
Procédé et dispositif pour fabriquer un article moulé

(30) Priority: 27.09.1993 US 126879; 31.05.1994 US 251602
(43) Date of publication of application: 29.03.1995
(73) Proprietor: HUSKY INJECTION MOLDING SYSTEMS LTD., Bolton Ontario L7E 5S5 (CA)
(72) Inventor: McCready, Derek, Mississauga L4W 3J9 (CA); Kalemba, Jacek, Mississauga L4Z 3P6 (CA); Hynds, John Charles, Etobicoke, Ontario (CA)
(74) Representative: Patentanwälte Breiter + Wiedmer AG

(56) References cited:
- US-A- 2 363 808
- PATENT ABSTRACTS OF JAPAN vol. 16, no. 363 (M-1290) 5 August 1992 & JP-A-04 113 820 (KATA SHISUTEMU)
- KUNSTSTOFFE, vol.64, no.8, 1974, MUNCHEN DE pages 393 - 395 GEMMER 'Spritzgiesswerkzeug für Verschlusskappe mit Innengewinde aus Polypropylen'
- PATENT ABSTRACTS OF JAPAN vol. 12, no. 142 (M-692) (2989) 30 April 1988 & JP-A-62 264 923 (SUMITOMO HEAVY IND LTD)

## Description

### BACKGROUND OF THE INVENTION

The present invention resides in a method and an apparatus for forming a molded plastic article, as plastic closures, particularly threaded molded articles, and particularly for removing said article from the mold.

The art of injection molding plastic closures is well known in the industry. Dependant upon the design of the plastic closure, including the thread type and number of complete threads, it may be ejected from the mold in a variety of ways. If the plastic material being molded is flexible or resilient it may be stripped by a commonly known stripper ring pushing the article off the core. The molded part must be solidified enough not to be folded over onto itself during ejection but sufficiently elastic to return to essentially its original molded shape after the threads have been stretched over the core. If the molded material does not possess the appropriate characteristics of flexibility for this most economical and simple method of ejection, the article will be damaged or may not return to its original shape and size. Similarly, a very defined or deep thread profile may be inherently prone to stripping damage. Also, the part may have other delicate or fragile features such as a commonly known tamper evident ring, which could be damaged even if an otherwise acceptable plastic is being injection molded.

For such situations where the molded part will be too rigid or fragile to simply push off the core, a collapsible core could be used such as the type shown in U.S. Patent No. 4,130,264. This patent shows a plurality of thread forming segments situated around the periphery of the core which move on tracks to collapse the core inwardly, so that the molded article can easily be pushed off.

In the case of molding a cap having an integral tamper evident ring, an alternative method is shown in U.S. Patent No. 4,155,698. Here the first female portion of the cavity which surrounds the threaded portion of the closure is removed from the molded closure, while a second female portion adjacent the tamper evident ring stays in place. The core is then retracted while the closure stretches elastically over it. This is possible because the closure device is held fast by the second female portion in the region of the tamper evident ring. The part can then be ejected by a core pin pushing on the inside of the closure or cap, as the inward elastic yielding of the fragile tamper evident ring is permitted.

When molding a plastic resin which is too rigid to be stripped from the threaded portion of the cavity, without permanent deformation of the molded article, one may use a method as shown in U.S. Patent No. 4,652,227. In this patent, an unscrewing chuck is used to come over the molded part once the female portion of the cavity is removed. The chuck grasps the outer feature of the closure, then rotates the closure as it moves slidably backward to facilitate the axial movement of the unscrewing closure. The patent also teaches that the unscrewing function can be accomplished, separately and simultaneously, outside of the molding area so as not to delay the injection molding of more closures. This method has the advantage of a simpler mold design which requires no moving parts for ejection of the article; however, the unscrewing system can become quite complicated and costly as it is virtually a machine unto itself.

Another method of unscrewing is accomplished by first separation of the mold halves (opening the mold), then rotating the core portion of the mold cavity while a stripper ring or bottom forming portion of the article moves slidably forward in timed relationship with the axial movement of the closure, until the closure is clear of the core portion and allowed to fall free from the molding area. The stripper ring will often employ protruding features, such as teeth or notches, which will keep the molded article from turning in the direction of the rotating core. The stripper ring may be moved forward by a sliding cam attachment that is linked to the rotation drive of the core, thereby ejecting the closure from the core. The sliding cam acts as a wedge by forcibly prying the stripper ring or stripper ring plate forward during the ejection of the article.

This approach carries with it various disadvantages and short-comings. If the core rotation means (rack) and stripper ring plate movement means (cam) are directly linked to a motive means which in turn is not directly linked to the mold closing means (injection machine clamp), there is the likelihood of collision damage should the mold closing means complete its task before the stripper ring return means. To eliminate this possibility, the stripper ring return means must be completed in sequence before the mold closing begins. These non-simultaneous movements can undesirably add one or two seconds to the entire mold cycle time.

A further disadvantage of the system is found in the molded article cooling time required.

For example, if water cooling is desired in the core portion to hasten solidification of the injected plastic, it is necessary to employ rotary water seals around the core to prevent water leaks. These seals will wear out with time due to rotational friction and must be replaced before the imminent leak occurs. In addition, the cores typically have a small drive gear (to maintain overall compactness) which restricts the water channel size in the core. A further disadvantage is evidenced in that the core portion is long and slender and as such, it is prone to wobble as it rotates, causing premature wear on the mating stripper ring surface. Even if the core does not wobble, wear is seen between the core and stripper ring mating surfaces because the core begins to turn while still in contact with the stripper ring. This is because the core rotation and stripper ring plate move simultaneously under directly connected mechanical force. The resultant wear causes a gap between the normally shut-off surfaces between the stripper ring and the core and allows the plastic melt to squeeze into the space (commonly known as "flashing" of the part). Costly repairs and down-time are the result of this occurrence. Of course, gear wear is also to be expected as the rack is used to drive the core rotation for the ejecting of the article as well as for the reregistering of the rack into its original position, ready for the next ejection stroke. Still a further disadvantage includes the excessive overall length of the core assembly, which incurs higher material costs and manufacturing difficulty, as well as limiting the number of available injection molding machines with sufficient clamp stroke to accept the overall mold shutheight. This has been found to be especially true for multi-level or stack molds.

JP-A-4113820 discloses an apparatus for forming a molded article and unscrewing the molded article from a core by means of a stripper ring being in threaded engagement with the core base. In order to restore the stripper ring to the correct molding orientation for the next shot, the stripper ring has to be rotated in reverse. This leads to increased wear on the mechanism of the rotating members and complicates the stripping action.

It is, therefore, the principal object of the present invention to provide an improved method and apparatus for forming a threaded, molded article, as a plastic closure and particularly for removing said article from the mold.

It is a further object of the present invention to provide an improved apparatus as aforesaid which is compact and durable and is capable of more rapid production without undue wear.

It is a still further object of the present invention to provide an apparatus as aforesaid which permits a mold core cooling channel of maximum size.

Further objects and advantages of the present invention will appear hereinbelow.

### SUMMARY OF THE INVENTION

In accordance with the present invention, the foregoing objects and advantages are readily obtained by the features of independent claims 1 and 2.

The apparatus of the present invention comprises:
a female mold having a mold surface for the formation of the outer surface of a molded, plastic article;
a mold core having an external core surface cooperating with the female mold to form a mold cavity therebetween in the mold closed position, said mold core being so constructed to form a threaded inner surface of said molded article in the mold closed position;
means for injecting plastic material into said mold cavity;
means for relatively moving the female mold to a position spaced from the mold core to space the female mold from the molded article and form a mold open position;
a movable, rotatable stripper ring fitted over the external core surface having a rearward and forward position and being in contacting relationship with the threaded article in the mold open position; and
means to rotate and axially move the stripper ring from the rearward to forward position thereof and thereby remove the threaded article from the mold core by rotating same.

The article may have a smooth external surface or axially oriented features such as ribs or serrations and the means for relatively moving the female mold is operative to move same away from the mold core and article thereon. Also, the molded article is preferably a threaded closure or cap with a flat, shaped or open upper portion and a side wall or skirt portion thereof depending therefrom, wherein the rotatable stripper ring forms a part of the mold cavity between the core and upper portion in the mold closed position, as for example, contacting the base of the skirt in the mold closed position.

The mold core is advantageously stationary and includes cooling channels therein with means for introducing a cooling medium into the cooling channels. Because the mold core is stationary, the cooling channel may be of maximum size. Also, the water seals which may be required are static and not prone to leakage.

The apparatus includes driving means connected to the stripper ring for rotational driving of the stripper ring. The driving means preferably includes a rack which drives a pinion which in turn drives the stripper ring, and means to reciprocate the rack, whereby the stripper ring moves axially relative to the core and is rotated from the rearward to forward position thereof to remove the article from the core and is returned to the rearward position. Alternatively, the rack can engage the stripper ring directly without the use of a pinion. Advantageously, the driving means includes a clutch operative to prevent rotational movement of the stripper ring when the driving means is returned to the rearward position. Such a clutch would also be advantageous in any rotating core type unscrewing mold. Additionally, the motive means for axial movement of the stripper ring provides that should the mold close before the stripper ring is moved independently to its rearward position, there is submission to the force without damage to mold components. The motive force for the stripper ring axial movement in this case is a spring or pneumatic piston or other such means which provides motive energy that can be overcome and compressed without damage. Furthermore, since the pneumatic piston or other means is not directly or mechanically connected to the means for rotating the stripper ring, it can be actuated to independently relieve the contact between the core and stripper ring shut-off surfaces to facilitate a small clearance between them before stripper rotation begins, resulting in reduced wear between the mating surfaces. This feature is not restricted to molds where the stripper ring is rotated but can also be employed on any rotating-core type unscrewing molds.

Preferably, one rack is engagable with multiple pinions and one pinion is engagable with multiple stripper rings.

The present invention may also be used to obtain a closure with a tamper ring.

Additional features and advantages of the present invention will appear hereinbelow.

### BRIEF DESCRIPTION OF THE DRAWINGS

The present invention will be more readily understandable from a consideration of the following exemplificative drawings, wherein:
Figure 1 is a sectional view of a core and mold assembly in the mold closed position;
Figure 2 is a view similar to Figure 1 in the mold open position;
Figure 3 is a front view of a 32 mold cavity layout using the assembly of Figure 1;
Figures 4A, 4B and 4C are side views of the layout of Figure 2 in different stages of operation;
Figures 5 and 6 are partial sectional views of alternate embodiments;
Figures 7 and 8 are enlarged detail views of the piston arrangement for moving the front and rear bearing plates;
Figure 9 is a front elevational view of a 32 mold cavity layout using the assembly of Figure 1 and showing a camming mechanism for actuating the same, in accordance with the principles of the present invention;
Figure 10A is a side elevational view of the mold in a mold closed position showing the camming mechanism used for assisting and ejecting the molded article;
Figure 10B is similar to Figure 10A wherein the mold is starting to open and a cam following mechanism is functioning to assist in initiating the ejection process;
Figure 10C is a view similar to Figure 10B wherein the mold is in the open position and the cam following mechanism has completed movement for the initial ejection process;
Figure 10D is a view similar to Figure 10C with the mold in the open position, showing a cylinder providing power for completing the ejection process;
Figure 11 is a view similar to Figure 9 showing an alternate embodiment;
Figure 12 is a view similar to Figure 2 showing an alternate embodiment; and
Figure 13 is a view similar to Figure 1 showing a still further embodiment.

### DETAILED DESCRIPTION OF PREFERRED EMBODIMENTS

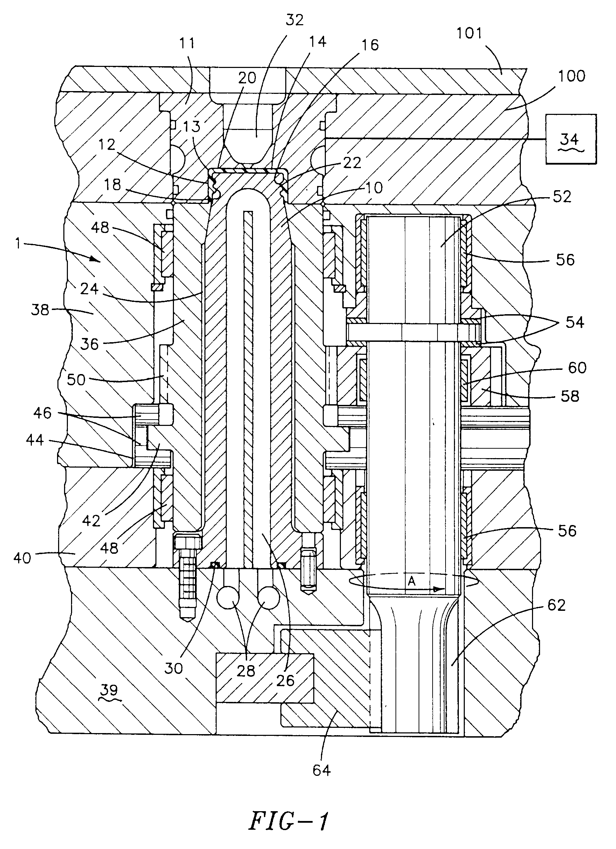

Figure 1 shows an apparatus of the present invention comprising a mold cavity assembly 1 in the mold closed position including mold core 10 cooperating with female mold 11 to form a mold cavity 12 therebetween, with female mold 11 having a mold surface 13 for the formation of the outer surface of molded plastic article 14 formed in mold cavity 12. Mold core 10 has a grooved surface 16 adjacent mold cavity 12 in the mold closed position for the formation of a threaded inner surface 18 on molded article 14. Naturally, the particular threaded design may vary depending on requirements.

Molded article 14 may be a threaded closure or cap with a flat, shaped or open upper portion 20 and depending skirt portion 22.

Mold core 10 is an elongated hollow core with an external core surface 24 having cooling channels 26 therein supplied by cooling inlet means 28 in fixed core plate 39 for introducing a cooling fluid, as water, into the cooling channels so that the mold core and molded article may be rapidly cooled. A static O-ring type water seal 30 may surround the cooling passages. Because the mold core is stationary, its design features permit a cooling channel or channels of maximum size for greatest efficiency in the solidification of the plastic product. Furthermore, the seal 30 is static and not prone to wear or leak.

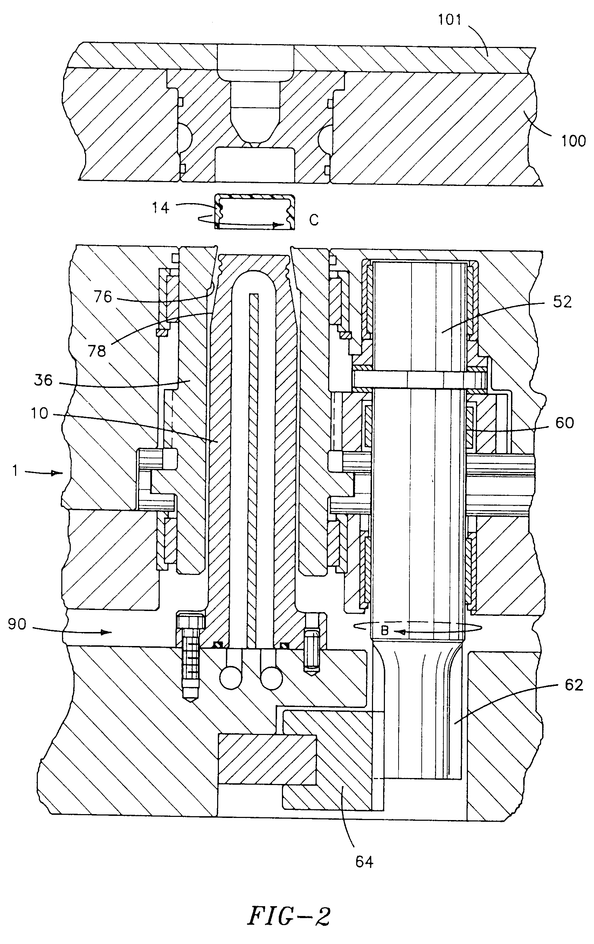

Injection means 32 are provided for injecting molten plastic material into mold cavity 12, as an injection nozzle fed from a source of molten plastic (not shown) for the formation of molded article 14 in the mold cavity. Motive means 34, shown schematically in Figure 1, are provided for moving mold 11 towards and away from mold core 10 to respectively form the mold closed (Figure 1) position and mold open (Figure 2) position. Alternatively, core 10 may be moved towards and away from female mold 11, or both the core and female mold may be moved. As shown in Figure 1, the molded article 14 desirably has a smooth external surface but may also have axial serrations or the like so that the motive means 34 is operative to move mold 11 axially, in a straight line, towards and away from mold core 10.

Annular stripper ring 36 is fitted over the external core surface 24 and is retained between the front bearing plate 38 and rear bearing plate 40 by sandwiching the flange portion 42 of stripper ring 36 in front bearing plate recess 44 using wear plates 46. Centering alignment of stripper ring 36 is provided by needle bearings 48 placed on opposite ends of the stripper ring. The stripper ring also has gear teeth 50 which are used for rotational driving of the stripper ring. The gear teeth are preferably located midway between the needle bearings for best support.

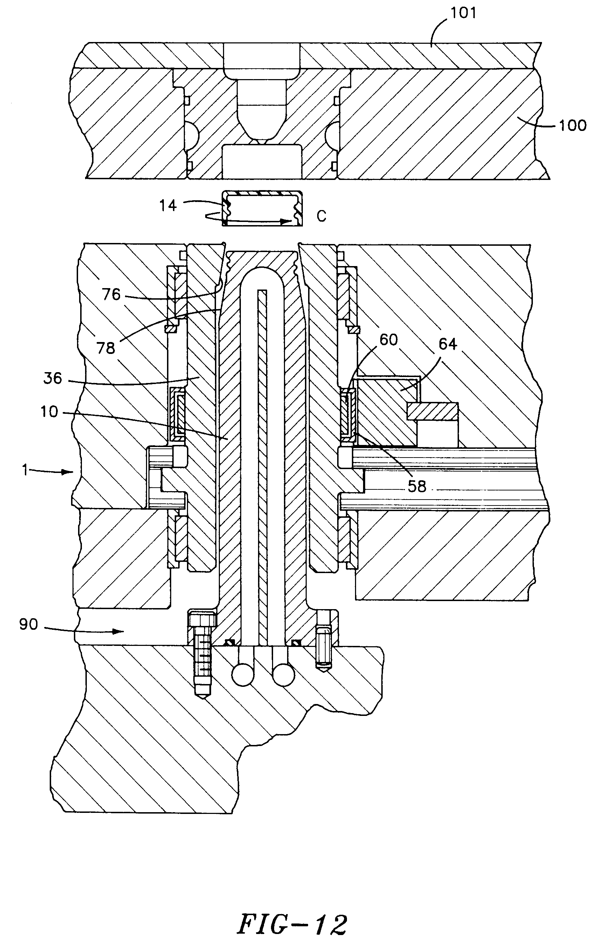

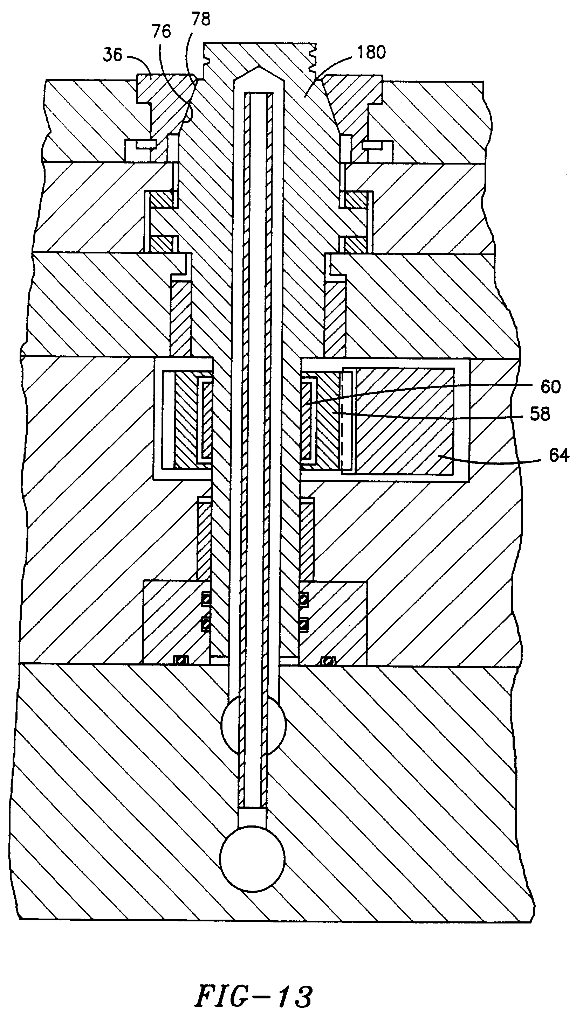

Pinion 52 is fitted in the front 38 and rear 40 bearing plates using thrust bearings 54 and needle bearings 56. Pinion gear 58, which engages stripper ring gear 50, is fitted with clutch 60. The pinion gear and clutch are fitted over the pinion into engagement with the stripper ring gear. The rear portion of pinion 52 also has a gear tooth configuration 62 or a separate gear mounted on the pinion which is engaged with a gear rack 64 used to initiate rotation of the stripper ring 36, as shown by arrow B in Figure 2 and to move stripper ring 36 to its forward position as shown in Figure 2, and as shown by arrow A in Figure 1 to move stripper ring 36 to its rearward position as shown in Figure 1. Front and rear bearing plates 38 and 40, respectively, adjoin fixed core plate 39 in the mold closed position shown in Figure 1 and are spaced therefrom by space 90 in the mold open position shown in Figure 2. Alternatively, clutch 60 with pinion gear 58 attached may be fitted over the stripper ring itself and driven directly by a rack without the inclusion of a pinion in the assembly as shown in Figure 12. As previously mentioned, the clutch can also be employed on any rotating core mold with similar advantages. Figure 13 shows this embodiment, where rotating core 180 is fitted with clutch 60 which has pinion gear 58 attached. Rack 64 has gear teeth directly meshed with the pinion gear and thereby provides direct rotational force for the core. The clutch 60 is operative to permit driving forces to the core 180 in one direction only, as previously discussed, so that the rack 64 can be reset to the start position for part ejection independently of the position of stripper ring 36, without concern for wear or friction at the shut-off surfaces 76 and 78. Additionally, the advantage of time savings is observed, as the mold can be closed immediately after the ejected parts have cleared the molding area, without waiting for the racks to be reset.

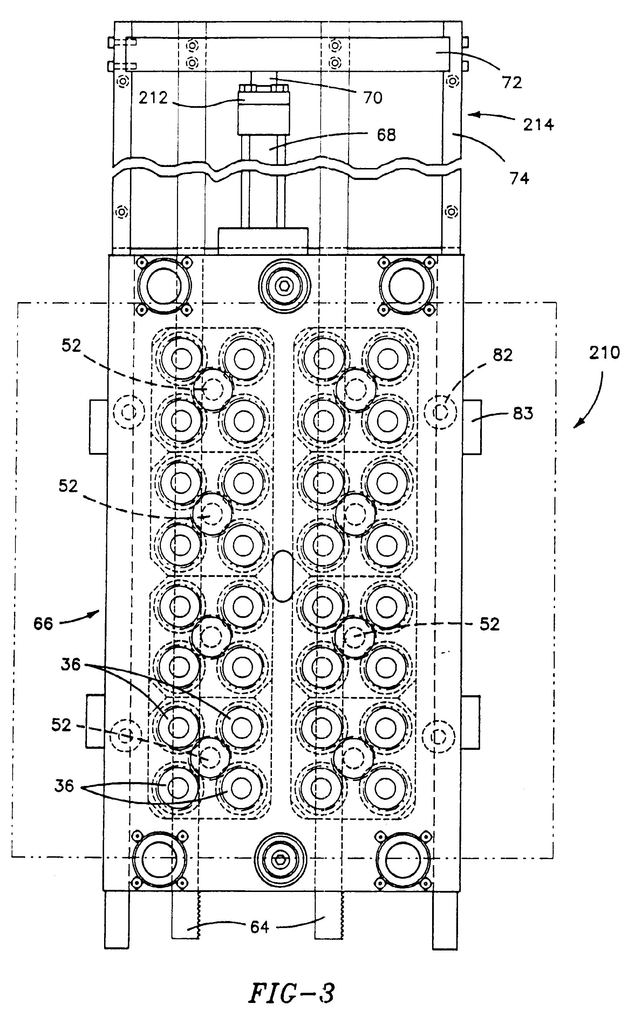

Figure 3 shows a front view of a representative mold cavity assembly 66 using the assembly of Figure 1 wherein rack 64 is placed vertically through the mold cavity assembly 66 engagable with multiple pinions 52, which in turn are engagable with four stripper rings 36 each. It is naturally possible to vary this arrangement based on particular requirements, for example, the pinion can engage only one or two or more stripper rings, based on the size variables of the molded article, pinion, stripper ring and mold layout. Other means known in the art may be used to rotate the pinions or stripper rings. Racks 64 are reciprocated by one or more hydraulic cylinder 68 or other desired means, which is fastened at its base to the top of the mold. The rack 64 and cylinder rod 70 are attached in assembly using cross member 72. Also, attached to cross member 72 is cam 74. Figure 3 shows the cylinder rod 70 in the retracted position with the racks pulled down. Movement of the cam 74 and rack 64 together via crossbar 72 provide the correct timing of forward and rotational motion for the given molded article 14 and thread pitch thereof.

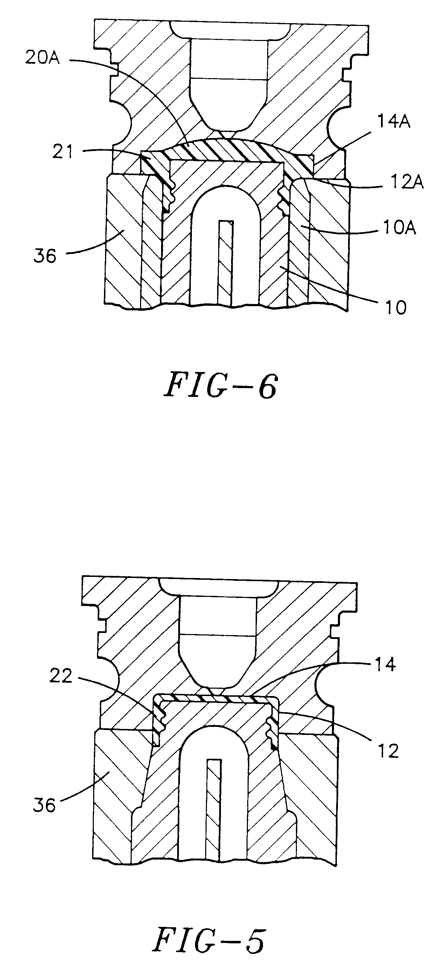

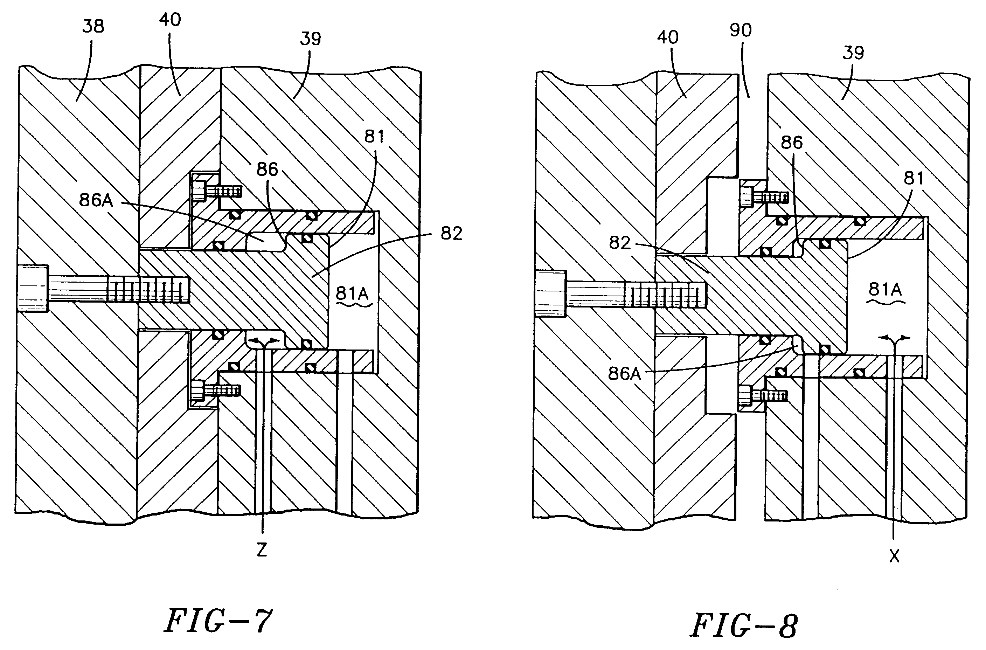

In operation, once the plastic has been injected and solidified, as shown in Figure 1, the mold opens via motive means 34 to move female mold 11 away from mold core 10, the mold assembly 1 is in the mold open position and the molded article 14 remains on the core. As shown in Figure 1, stripper ring 36 preferably forms a part of the base of mold cavity 12 in the mold closed position and contacts the base of the skirt 22 of molded article 14. Alternatively, as shown in Figure 5, stripper ring 36 may form a part of the side of mold cavity 12 and contact the side of skirt 22 of molded article 14. The stripper ring removes the article by inward pressure thereon due to the angular configuration of the forward portion of the stripper ring adjacent the molded article, alternatively assisted by air pressure. A further alternate embodiment is shown in Figure 6 wherein molded article 14A includes an upper portion 20A with an outer flange portion 21. In this embodiment, stripper ring 36 forms a part of mold cavity 12A adjacent flange portion 21 and removes the molded article 14A by pressure on the flange portion 21. Core 10 may optionally include core sleeve 10A which facilitates manufacturing of the core section.

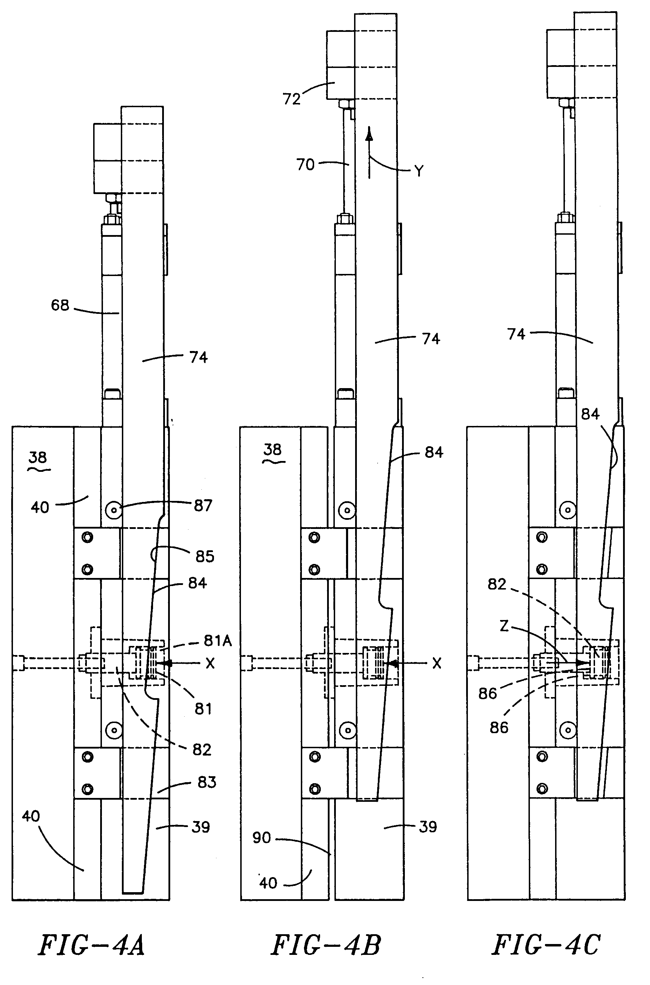

Figures 4A, 4B and 4C show side views of the layout of Figure 2 in various stages of operation. The rack 64 (not shown in Figure 4), cam 74 (both associated with hydraulic cylinder 68) and fixed pneumatic piston 82 (see Figures 3 and 4 and the enlarged detail views of Figures 7 and 8) are then activated substantially simultaneously, or preferably with the pneumatic piston activated slightly before to affect a small clearance between the core 10 and stripper ring (36), to turn the pinion 52 and stripper ring 36 and advance the stripper ring forward at a predetermined rate governed by the angle of cam face 84 as it slides against cam follower 83. The effect of pneumatic piston 82 is to hold cam face 84 in contact with cam follower 83. A slight clearance between the cam and cam follower in their initial (mold closed) position will allow the pneumatic piston to initiate clearance between the core and stripper ring before rotation starts. Cam follower 83 is fixed to the rear bearing plate 40 as shown in Figure 4. This action serves to unscrew article 14 from mold core 10. Figure 2 shows stripper ring 36 in its forward position with article 14 released from core 10 by rotation thereof in the direction of arrow C. The stripper ring and mold can now be returned to their mold closed position independent of the rack and cam assembly as shown in Figure 4, saving time in the operation. If the pneumatic piston 82 has not been energized to move the stripper ring back before the mold closes, no damage will occur due to the compressive spring nature of the pneumatic piston 82. As the rack-cam assembly moves back to its home position, clutch 60 allows the stripper ring to remain stationary without rotation thereof and without the resultant wear between gear teeth or mold shut-off surfaces 76, 78.

The operation and detail of piston 82 and cam 74 will be described below. Since the stripper ring 36 is supported and held between bearing plates 38 and 40, it is necessary to move these two plates away from core plate 39 in timed relationship with the rotation of the stripper ring 36 to eject the molded article. To achieve this, air pressure is supplied to first face 81 of fixed piston 82 in the direction of arrow X into chamber 81A which adjoins first face 81, see Figure 8. The air pressure in the direction of arrow X acts on bearing plates 38 and 40 and moves plates 38 and 40 away from fixed core plate 39 enlarging chamber 81A as shown in Figure 8. However, the movement is restricted by face 84 of cam 74 which is associated with plate 39 and face 85 of cam follower 83 which is associated with plate 40. As previously described, the movement is slight and merely permits a small clearance between the core and stripper ring. As cam 74 moves upwardly in the direction of arrow Y as shown in Figures 4A, 4B and 4C, inclined face 84 of cam 74 permits separation of plates 38 and 40 from plate 39 as shown in Figure 8 with space 90 between these plates. The angle of cam face 84 and cam follower face 85 is designed such that the vertical distance moved by rack 64 (and consequently cam 74) to produce exactly one rotation of stripper ring 36, will also permit a horizontal movement of cam follower 83 and therefore to stripper ring 36 equal to the pitch of the thread on the molded part 14. At the end of the stroke, the parts will have fallen off and the mold is ready for closing. Air pressure is then switched to second face 86 of piston 82 in the direction of arrow Z into chamber 86A urging plates 38 and 40 towards plate 39 as shown in Figure 7 by enlarging chamber 86A and moving plates 38 and 40 in the opposite direction shown in Figures 4A and 4B. This can be done when the mold is closing as the cam and cam follower faces are not restricted from separating and are independent in this direction of motion. Therefore, it is not necessary to wait for cam 74 to return to the original position. This should be contrasted to the usual method of using a cam to push the plate mechanically forward by wedging itself between two plates. Of course, in that device, it would be mandatory to wait for the cam (wedge) to be repositioned to allow the return of plate 38 and 40 for the closing operation of the mold to commence. Rollers 87 are used to provide back-up support for the cams.

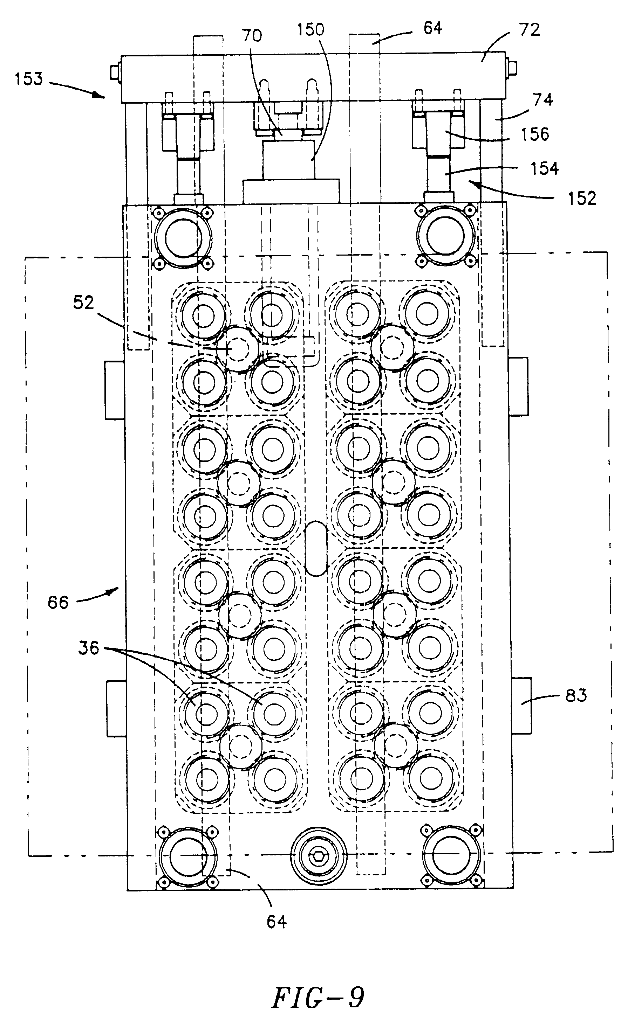

Referring to Figure 9 which is a view similar to Figure 3, racks 64 are reciprocated by two sources, an initial source which is camming mechanism 152, which is driven by motive means 34 (shown in FIG. 1), for the first quarter of the ejection process, and a secondary source, which is a pneumatic cylinder 150, for the remaining three quarters of the ejection process. Camming mechanism 152 functions to initiate the ejecting process by breaking the molded articles loose from the mold core, while the cylinder 150 completes the ejection process by continuing the rotation of the article after the initial break. Figure 3, on the other hand, shows an example of a system 210 using only one power source, a hydraulic cylinder 212, for the entire ejection process. Due to the need for a strong initial breaking force for overcoming the sticking of the molded article to the mold, a large and forceful hydraulic cylinder 212 is used. Hydraulic cylinder 212 provides force after the initial break which is usually excessive for the remaining portion of the ejection process. However, with camming mechanism 152, the smaller pneumatic cylinder 150 can be used which, as shown in Figure 9, occupies much less room and allows the top portion 153, to be much smaller in scale, particularly height, than a similar top portion 214 shown in Figure 3, necessarily using much larger cylinder 212.

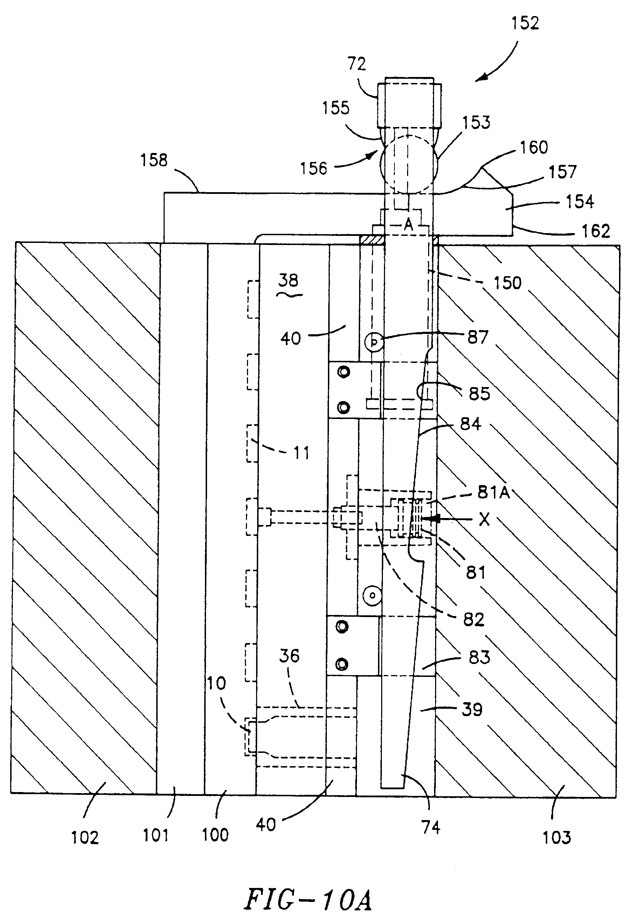

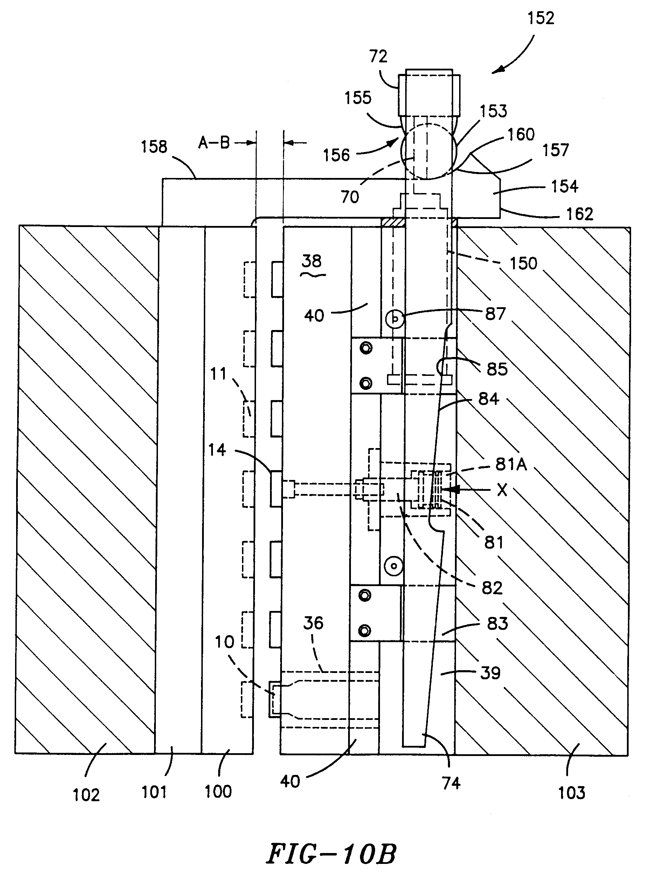

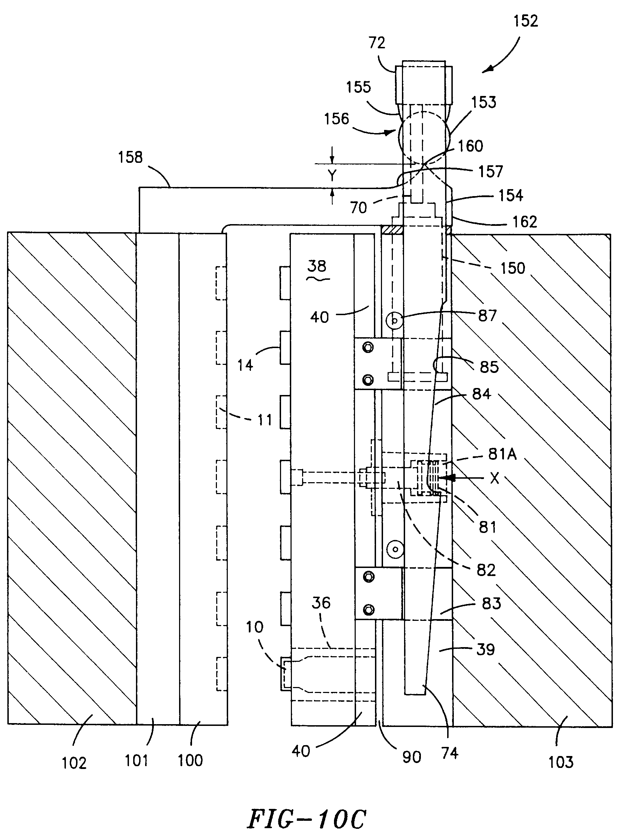

As shown in Figures 10A, 10B and 10C, camming mechanism 152 includes a cam 154 and a cam following mechanism 156. Cam 154 is bolted or otherwise connected to mold cavity plate 100 and mold manifold plate 101. Cam 154 extends substantially horizontally over core plate 39 and may extend with the mold in the mold closed position over machine platen 103. Cam following mechanism 156, comprised of roller 153 and bracket 155, is attached via the bracket 155 and fasteners or the like, to the lower surface of cross-member 72. Cross member 72 is fastened to racks 64 (see FIG. 3) and vertical cams 74, which function to turn article 14 away from core 10 and separate plates 38 and 40 from core plate 39, respectively. With the attachment of racks 64 (see Figure 9) and cam 74 to cross-member 72, the movement of cam following mechanism 156 along cam 154 effectuates motion to both elements, cam 74 and racks 64.

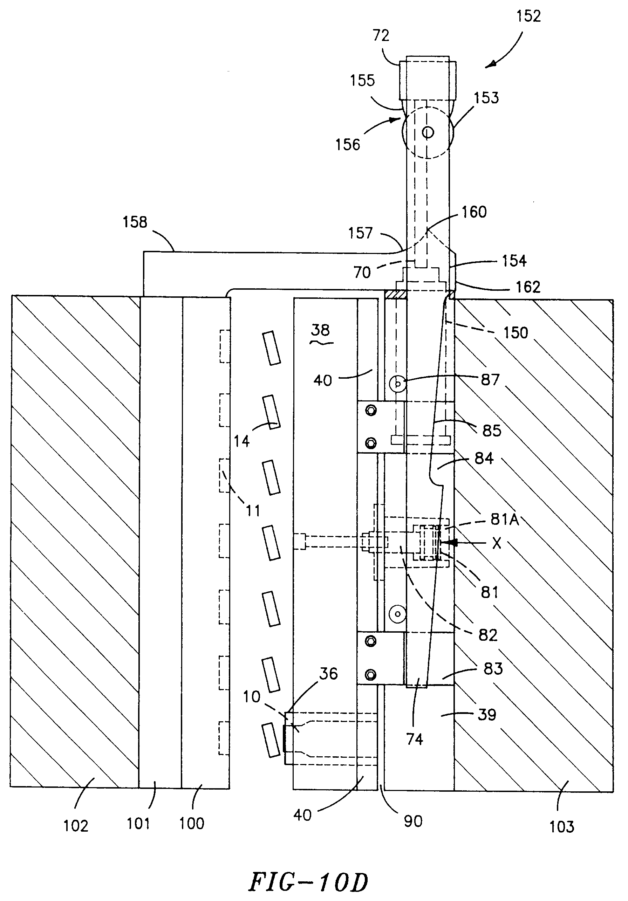

In the mold closed position, as shown in Figure 10A, cam following mechanism 156 rests on the horizontal portion of cam surface 158 of cam 154 immediately adjacent inclined surface 157. Referring to Figure 10B, at about the 3/4 length point of surface 158, the cam begins to extend angularly upward via inclined surface 157 to a rounded peak 160, which peak 160 is adapted to be moved into alignment with cylinder 150 and cylinder rod 70, during movement of cam 154 and plate 101. Cam surface 158 then continues downward on an angle to a distal edge 162. The height and angular configuration of inclined surface 157 of cam 154 leading to peak 160 is designed such that camming mechanism 152, following this surface, functions to move rack 64 (see FIG. 3) a distance which turns stripper ring 36 approximately 45°. Referring to Figure 10C, the force applied during this 45° displacement is sufficient to initially break molded article 14 from core 10. When peak 160 is reached by cam following mechanism 156, piston 150 takes over and completes the upward motion of cam following mechanism 156, driving rod 70, cross member 72 and racks 64 (not shown) upward, rotating the stripper ring (not shown) and ejecting molded articles 14, as shown in Figure 10D.

In operation, once the plastic has been injected and solidified, as shown in Figure 1, the mold opens via motive means 34 to move female mold 11 away from mold core 10, as shown in FIG. 2, and the mold assembly 1 assumes the mold open position with the molded article 14 remaining on the core. As shown in Figure 1, stripper ring 36 preferably forms a part of the base of mold cavity 12 in the mold closed position and contacts the base of the skirt 22 of molded article 14. Alternatively, one can employ variations such as shown in Figures 5 and 6.

Figures 10A-10D show side views of the layout of Figure 9 in various stages of operation. The rack 64 (shown in Figure 9), cam 74 (both associated with camming mechanism 152 and pneumatic cylinder 150) and fixed pneumatic piston 82 (see the enlarged detail views of Figures 7 and 8) are then activated substantially simultaneously, or preferably with the pneumatic piston activated slightly before to affect a small clearance between the core and stripper ring, to turn the pinion 62 (see Figure 9) and stripper ring 36 and advance stripper ring 36 forward at a predetermined rate governed by the angle of cam face 84 as it slides against cam 83.

Initially, the high force turning of pinion 52 (see Figure 9) and advancement of stripper ring 36 is effected by camming mechanism 152, as shown in Figures 10A and 10B. By using the opening force of motive means 34 (see Figure 1), the upward movement of camming mechanism 152 functions to initiate the ejection of the molded article 14 from mold core 10. Because the initial breaking of article 14 from mold core 10 requires a greater force than the subsequent ejection procedure, pneumatic cylinder 150, which provides less force than the camming mechanism 152, can be used to finish the ejection process. If desired, a hydraulic cylinder may be employed with the advantage of additional reduction in size.

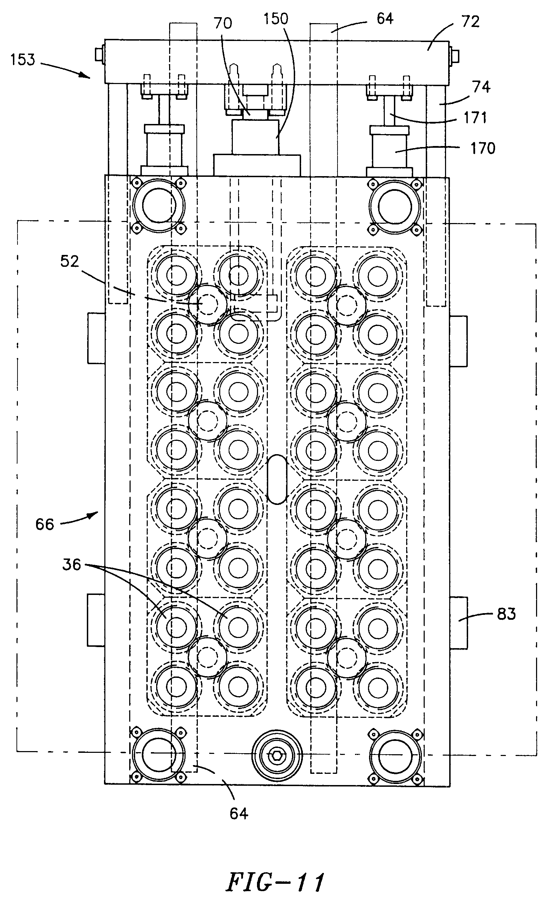

Alternatively, as shown in Figure 11, the camming mechanism 152 (see Figure 9) may be substituted with pneumatic cylinders or hydraulic cylinders 170 with a substantially reduced piston rod 171 as compared to cylinder 150. The reduced cylinder height and compact size permits additional room for other mold components.

Camming mechanism 152 is designed so that there will be no vertical lift imparted to cam following mechanism 156, rack 64 (see Figure 9) and cam 74, and consequently no rotation of stripper ring 36, until the mold has opened a sufficient distance. This distance is indicated as A-B in Figure 10B and is such that the threaded molded article 14 will not begin turning away from mold core 10 for subsequent ejection until it has been cleared away from female mold 11.

As the motive means begins to move the female mold away from mold core 10, the horizontal surface of cam 154 begins to move underneath cam following mechanism 156, as shown in Figures 10A-10C. However, power is not transferred via racks 64 and pinions 52 until cam following mechanism 156 is directed up inclined surface 157, as shown in Figure 10B. That is, the movement of cam 154 does not impart vertical movement to cam following mechanism 156 until plates 38 and 100 have separated distance A-B so as to enable article 14 to freely fall between plates 38 and 100. The actual ejection process is initiated by the power of motive means 34 (see Figure 7) when cam following mechanism 156 is forced up inclined surface 157.

As plates 38 and 100 continue to separate, inclined surface 157 directs cam following mechanism 156 upward to initiate movement of vertical cam 74 and rack 64 (see FIG. 9). One result of the upward movement of cam following mechanism 156, is that rack 64 imparts rotation to stripper ring 36 which subsequently imparts rotation to molded article 14.

As shown in Figure 10C, cam following mechanism 156 moves to the maximum vertical peak 160, which motion causes approximately the first 45° of rotation of molded article 14. At the same time or immediately following the lifting initiated by the camming mechanism 152, cylinder 150, having cylinder rod 70 attached to center cross-member 72, is actuated for completing the ejection process. Accordingly, and referring to Figure 10D, lift cylinder 150 continues the momentum generated by camming mechanism 152 and fully extends stripper ring 36, thereby ejecting molded articles 14. As a consequence of camming mechanism 152 performing the most forceful function of the ejecting process, the initiation of the rotation of stripper ring 36 and overcoming any sticking or gripping of molded article 14 to core 10, cylinder 150 can be more compact and arranged in more space efficient manner than previously obtainable with similar ejection mechanisms.

While camming mechanism 152 has been described for use with a stripper ring, this supplementary force actuating mechanism may be used with other types of molds and ejection systems which rotate the core portion of the mold instead of using a stripping ring. Even more broadly, the supplementary camming mechanism can be used with any ejection system which reciprocates racks or cams and could benefit from a boost in starting the ejection motion.

Referring still to Figures 10A-10D, the effect of pneumatic piston 82 is to hold cam face 84 in contact with cam follower 83. A slight clearance between the cam and cam follower in their initial position will allow the pneumatic piston to initiate clearance between the core and stripper ring before rotation begins. Cam follower 83 is fixed to the rear bearing plate 40 as shown in Figures 3 and 10A. This action serves to control the unscrewing of article 14 from mold core 10. Figure 2 shows stripper ring 36 in its forward position with article 14 released from core 10 by rotation thereof in the direction of arrow C. The stripper ring and mold can now be returned to their mold closed position independent of the rack and cam following mechanism as shown in Figure 5, saving time in the operation. If the pneumatic piston 82 has not been energized to move the stripper ring back before the mold closes, no damage will occur due to the compressive spring nature of the pneumatic piston 82. As the rack-cam assembly moves back to its home position, clutch 60 allows the stripper ring to remain stationary without rotation thereof and without the resultant wear between gear teeth or mold shut-off surfaces 76, 78.

The operation and detail of piston 82 and cam 74 will be described below. Since the stripper ring 36 is supported and held between bearing plates 38 and 40, it is necessary to move these two plates away from core plate 39 in timed relationship with the rotation of the stripper ring 36 to eject the molded article, as shown in Figures 10C and 10D. To achieve this, air pressure is supplied to first face 81 of fixed piston 82 in the direction of arrow X into chamber 81A which adjoins first face 81, see Figure 8. The air pressure in the direction of arrow X acts on bearing plates 38 and 40 and moves plates 38 and 40 away from fixed core plate 39, see Figure 10C, enlarging chamber 81A as shown in Figure 8. However, the movement is restricted by face 84 of cam 74 which is associated with plate 39 and face 85 of cam follower 83 which is associated with plate 40. As previously described, the movement is slight and merely permits a small clearance between the core and stripper ring. As cam 74 moves upwardly in the direction of arrow Y as shown in Figures 10C-10D, inclined face 84 of cam 74 permits separation of plates 38 and 40 from plate 39, with space 90 between these plates. The angle of cam face 84 and cam face 85 is designed such that the vertical distance moved by rack 64 (and consequently cam 74) to produce exactly one rotation of stripper ring 36, one quarter of which is initiated by camming mechanism 152, will also permit a horizontal movement of cam follower 83 and therefore to stripper ring 36 equal to the pitch of the thread on the molded article 14. At the end of the stroke, the parts will have fallen off and the mold is ready for closing. Air pressure is then switched to second face 86 of piston 82 in the direction of arrow Z into chamber 86A urging plates 38 and 40 towards plate 39 as shown in Figure 7 by enlarging chamber 86A and moving plates 38 and 40 in the opposite direction, as shown in Figures 7 and 10A. This can be done when the mold is closing as the cam and cam faces are not restricted from separating and are independent in this direction of motion. Therefore, it is not necessary to wait for cam 74 to return to the original position. This should be contrasted to the usual method of using a cam to push the plate mechanically forward by wedging itself between two plates. Of course, in that device, it would be mandatory to wait for the cam (wedge) to be repositioned to allow the return of plate 38 and 40 for the closing operation of the mold to commence. Rollers 87 are used to provide back-up support for the cams.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its scope as defined by the claims.

## Claims

1. A method for forming a molded plastic article (14) with an outer surface thereof using an apparatus comprising:
- a female mold (11) having a mold surface (13) for the formation of the outer surface of said molded plastic article;
- a mold core (10) having an external core surface (24) cooperating with said female mold to form a mold therebetween, said mold having a mold closed position and a mold open position, said mold core and female mold forming a mold cavity (12) in the mold closed position;
- means (32) associated with the female mold (11) for injecting plastic material into said mold cavity (12);
- means (34) for spacing apart said female mold (11) and mold core (10) to space the female mold from the molded article and form a mold open position; and
- means to remove the molded article (14) from the mold core (10) by unscrewing the article from the core, whereby the unscrewing means are moved from a rearward position in the mold closed position to a forward position in the mold open position and thereafter reset to the rearward position,
characterised in that
the unscrewing means are reset to the rearward position by a clutch means (60) without rotating said unscrewing means.

2. Apparatus for forming a molded plastic article (14) with an outer surface thereof and ejecting the molded article, which comprises:
- a female mold (11) having a mold surface (13) for the formation of the outer surface of said molded plastic article;
- a mold core (10) having an external core surface (24) cooperating with said female mold to form a mold therebetween, said mold having a mold closed position and a mold open position, said mold core and female mold forming a mold cavity (12) in the mold closed position;
- means (32) associated with the female mold (11) for injecting plastic material into said mold cavity (12);
- means (34) for spacing apart said female mold (11) and mold core (10) to space the female mold from the molded article and form a mold open position; and
- means to remove the molded article (14) from the mold core (10) by unscrewing the article from the core, whereby the unscrewing means are moved from a rearward position in the mold closed position to a forward position in the mold open position and thereafter reset to the rearward position, said means to removing including:
- (1) a movable, rotatable stripper ring (36) fitted over a portion of the external core surface (24) having a rearward position in the mold closed position and a forward position in the mold open position, said stripper ring (36) being in contacting relationship with said threaded article (14) in the mold open position, and means to rotate the stripper ring (36) from the forward position thereof; or
- (2) a cam (74) connected to a rack (64) and spaced therefrom, wherein the cam and rack are operative to move together while still permitting limited axial movement of the removal means independent of the stroke of said cam and rack; and/or
- (3) means (34) to rotate the core and thereby remove the threaded article from the core by rotating the core, ejection moving means for transmitting rotational power to the core, said ejection moving means connected with said core and positioned adjacent said core, initial source means for powering said ejection moving means, said initial source means providing power sufficient to enable said core to break said article loose from the mold surface of the mold core, and secondary source means, said secondary source means providing sufficient power to enable said core to finish the ejection of said article after the article is broken loose from the mold core;
characterised in that
- said means to remove the molded article (14) from the mold core (10) by unscrewing including a clutch means (60) for resetting the unscrewing means to the rearward position without rotating said unscrewing means.

3. Apparatus according to claim 2 wherein said article (14) has an external surface and a threaded inner surface (18) and the means (34) for spacing apart is operative to move the female mold in a straight line away from the mold core (10) and article thereon.

4. Apparatus according to one of the claims 2 or 3 wherein the mold core (10) is stationary and includes cooling channels (26) therein with means (28) for introducing a cooling fluid into said cooling channels.

5. Apparatus according to one of the claims 2 to 4 wherein said means to rotate the stripper ring (36) includes a rack (64) which drives a pinion (52), which in turn drives the stripper ring (36) and means to reciprocate the rack, whereby the stripper ring is rotated from the rearward to the forward position thereof and moves axially relative to the core to remove the article from the core and is returned to the rearward position thereof.

6. Apparatus according to claim 5 wherein said means to rotate the stripper ring (36) includes a clutch (60) fitted over the pinion (52), and a cam (74) to the rack (64).

7. Apparatus according to claim 6 wherein the pinion (52) is fitted in front and rear bearing plates (38,40), wherein the pinion drives the stripper ring (36), and including a fixed core plate (39) adjacent the front and rear bearing plates, and means to move the bearing plates away from and towards the fixed core plate, and wherein the cam (74) has a cam face (84) with an angle thereof and the bearing plates move away from the core plate at the rate permitted by the angle of the cam face.

8. Apparatus according to one of the claims 2 to 7 including:
- ejection moving means for transmitting rotational power to and causing motion of said movable stripper ring (36), said ejection moving means connected with said movable stripper ring and positioned adjacent said movable stripper ring;
- initial source means for converting said relative motion into power for powering said ejection moving means, said initial source means providing power sufficient to enable said movable stripper ring to break said article (14) loose from said mold surface of said mold core (10); and
- secondary source means for powering said ejection moving means, said secondary source providing sufficient power to enable said movable stripping ring to finish the ejection of said article after said article is broken loose from said mold core.

9. Apparatus according to claim 8 wherein said initial source means comprises a cam (154) connected with said female mold (11) and a cam following mechanism (156) connected with said ejection moving means, said cam adapted to move relative to said cam following mechanism and impart motion to said cam following mechanism for energizing said ejection moving means during the separation of said female and male molds.

10. Apparatus according to claim 9 wherein said ejection moving means comprises a rack (64) and pinion (52), said rack being connected on one end with said cam following mechanism (156) and on another end with said pinion (52), said pinion engaged with said movable stripper ring (36), wherein said pinion engages said stripper ring for inducing rotation to said stripper ring.

11. Apparatus according to claim 9 or 10 wherein said cam following mechanism (156) is adapted to move an element of said ejection moving means in a first direction and said secondary source means is adapted to move said element in said first direction substantially subsequent to said cam following mechanism, and wherein said cam extends in a direction which traverses said first direction, said cam having an inclined surface (157) extending to a peak (160), wherein said cam following mechanism is adapted to follow said cam to said peak.

12. Apparatus according to claim 11 wherein said article (14) becomes loosened from said mold core when said cam following mechanism (156) reaches said peak (160), said secondary source means adapted to energize at least when said cam following mechanism reaches said peak for enabling said stripper ring (36) to complete the ejection of said article.

13. Apparatus according to claim 11 or 12 wherein said secondary source means is a cylinder (150) having a cylinder rod (70) movable therein, said cylinder rod being connected to and in alignment with said cam following mechanism and positioned and movable in said first direction, said cylinder positioned in said second mold half.

14. Apparatus according to claim 2 including a movable stripper ring and a cam connected to a rack and spaced therefrom, wherein axial movement of the removal means relieves contact between the stripper ring and the mold core prior to rotation of at least one of the stripper ring and mold core.

15. Apparatus according to claim 2 wherein the position of the removal means does not restrict or prevent closing the mold.

16. Apparatus according to claim 2 wherein the cam is not a mechanical wedge forcing axial movement of the removal means.

17. Apparatus according to claim 2 wherein said initial source means comprises at least one piston in addition to said secondary source means.

## Patentansprüche

1. Verfahren zum Formen eines geformten Kunststoffgegenstandes (14) mit einer äusseren Oberfläche unter Verwendung einer Vorrichtung, welche aufweist:
- eine weibliche Form (11) mit einer Formoberfläche (13) zur Formung der äusseren Oberfläche jenes geformten Kunststoffgegenstandes;
- einen Formkern (10) mit einer äusseren Kernoberfläche (24), die mit jener weiblichen Form unter Bildung einer zwischenliegenden Form zusammenarbeitet, wobei jene Form eine Offenstellung und eine Schliessstellung aufweist, und wobei jener Formkern und jene weibliche Form in der Schliessstellung einen Formhohlraum (12) bilden;
- mit der weiblichen Form (11) verbundene Mittel (32) zum Einspritzen von Kunststoffmaterial in jenen Formhohlraum (12);
- Mittel (34) zum Trennen jener weiblichen Form (11) und jenes Formkernes (10), um die weibliche Form vom geformten Gegenstand zu trennen und eine Offenstellung der Form zu bilden; und
- Mittel zum Entfernen des geformten Gegenstandes (14) vom Formkern (10) durch Losschrauben des Gegenstandes vom Kern, wobei die Mittel zum Losschrauben aus einer hinteren Stellung in der Schliessstellung der Form in eine vordere Stellung in der Offenstellung der Form bewegt und anschliessend in die hintere Stellung zurückversetzt werden,
dadurch gekennzeichnet, dass
die Mittel zum Losschrauben durch ein Kupplungsmittel (60) ohne Rotation jenes Mittels zum Losschrauben in die hintere Stellung zurückgesetzt wird.

2. Vorrichtung zum Formen eines geformten Kunststoffgegenstandes (14) mit einer äusseren Oberfläche und Auswerfen des geformten Gegenstandes, welche aufweist:
- eine weibliche Form (11) mit einer Formoberfläche (13) zur Formung der äusseren Oberfläche jenes geformten Kunststoffgegenstandes;
- einen Formkern (10) mit einer äusseren Kernoberfläche (24), die mit jener weiblichen Form unter Bildung einer zwischenliegenden Form zusammenarbeitet, wobei jene Form eine Offenstellung und eine Schliessstellung aufweist, und wobei jener Formkern und jene weibliche Form in der Schliessstellung einen Formhohlraum (12) bilden;
- mit der weiblichen Form verbundene Mittel (32) zum Einspritzen von Kunststoffmaterial in jenen Formhohlraum (12);
- Mittel (34) zum Trennen jener weiblichen Form (11) und jenes Formkernes (10), um die weibliche Form vom geformten Gegenstand zu trennen und eine Offenstellung der Form zu bilden; und
- Mittel zum Entfernen des geformten Gegenstandes (14) vom Formkern (10) durch Losschrauben des Gegenstandes vom Kern, wobei die Mittel zum Losschrauben aus einer hinteren Stellung in der Schliessstellung in der Form in eine vordere Stellung in der Offenstellung der Form bewegt und anschliessend in die hintere Stellung zurückversetzt werden, wobei jene Mittel zum Entfernen umfassen:
- (1) einen beweglichen, drehbaren Abstreifring (36), der einem Teil der äusseren Kernoberfläche (24) anliegt und der eine hintere Stellung in der Schliessstellung der Form und eine vordere Stellung in der Offenstellung der Form aufweist, wobei jener Abstreifring (36) in berührender Beziehung mit jenem mit einem Gewinde versehenen Gegenstand (14) in Offenstellung der Form steht, und Mittel zum Rotieren des Abstreifringes (36) aus der vorderen Stellung; oder
- (2) einen Nocken (74) verbunden mit einer Zahnstange (64) und von dieser beabstandet, wobei der Nocken und die Zahnstange so Zusammenwirken, dass sie sich zusammen bewegen, während trotzdem eine begrenzte axiale Bewegung der Mittel zum Entfernen möglich ist, unabhängig vom Takt jenes Nockens und jener Zahnstange; und/oder
- (3) Mittel (34) zum Rotieren des Kernes und hierbei Entfernen des mit einem Gewinde versehenen Gegenstandes vom Kern durch Rotieren des Kernes, Auswurfbewegungsmittel zum Uebertragen einer Rotationskraft auf den Kern, wobei jene Auswurfbewegungsmittel mit jenem Kern verbunden und benachbart zu jenem Kern angeordnet sind, erste Mittel zum Antreiben jener Auswurfbewegungsmittel, wobei jene ersten Mittel genügend Kraft bereitstellen, um es jenem Kern zu ermöglichen, jenen Gegenstand von der Formoberfläche des Formkerns loszubrechen, und zweite Mittel, wobei jene zweiten Mittel genügend Kraft bereitstellen, um es jenem Kern zu ermöglichen, den Auswurf jenes Artikels zu beenden, nachdem der Artikel vom Formkern losgebrochen ist;
dadurch gekennzeichnet, dass
jenes Mittel zum Entfernen des geformten Gegenstandes (14) vom Formkern (10) durch Losschrauben ein Kupplungsmittel (60) zum Zurücksetzen des Mittels zum Losschrauben in die hintere Stellung ohne Rotation jenes Mittels zum Losschrauben umfasst.

3. Vorrichtung nach Anspruch 2, wobei jener Gegenstand (14) eine äussere Oberfläche und eine mit einem Gewinde versehene innere Oberfläche (18) aufweist und das Mittel (34) zum Trennen so wirkt, dass die weibliche Form in einer geraden Linie vom Formkern (10) und dem darauf sitzenden Gegenstand wegbewegt wird.

4. Vorrichtung nach einem der Ansprüche 2 oder 3, wobei der Formkern (10) stationär ist und darin angeordnete Kühlkanäle (26) mit Mitteln (28) zum Einführen einer Kühlflüssigkeit in jene Kühlmittelkanäle umfasst.

5. Vorrichtung nach einem der Ansprüche 2 bis 4, wobei jene Mittel zum Rotieren des Abstreifringes (36) eine Zahnstange (64) umfassen, welche eine Kammwalze (52) antreibt, welche ihrerseits den Abstreifring (36) antreibt, sowie Mittel zur Hin- und Herbewegung der Zahnstange, wobei der Abstreifring von seiner hinteren in seine vordere Stellung rotiert wird und sich axial relativ zum Kern bewegt, um den Gegenstand vom Kern zu entfernen und in seine hintere Stellung zurückversetzt wird.

6. Vorrichtung nach Anspruch 5, wobei jenes Mittel zum Rotieren des Abstreifringes (36) eine über der Kammwalze (52) angeordnete Kupplung (60) und einen der Zahnstange (64) zugeordneten Nocken (74) umfasst.

7. Vorrichtung nach Anspruch 6, wobei die Kammwalze (52) in vordere und hintere Lagerplatten (38, 40) eingepasst ist, wobei die Kammwalze den Abstreifring (36) antreibt, und umfassend eine befestigte Kernplatte (39) benachbart zu den vorderen und hinteren Lagerplatten, und Mittel zum Bewegen der Lagerplatten weg von der und gegen die befestigte Kernplatte, und wobei der Nocken (74) eine Nockenfläche (84) mit einem Winkel aufweist und die Lagerplatten sich von der Kernplatte entsprechend dem durch den Winkel der Nockenfläche ermöglichten Betrag wegbewegen.

8. Vorrichtung nach einem der Ansprüche 2 bis 7, umfassend:
- Auswurfbewegungsmittel zur Uebertragung einer Rotationskraft auf jenen beweglichen Abstreifring (36) und zur Bewirkung der Bewegung jenes Abstreifringes (36), wobei jenes Auswurfbewegungsmittel mit jenem beweglichen Auswurfring verbunden und benachbart zu jenem beweglichen Auswurfring angeordnet ist;
- erste Mittel zur Umwandlung jener relativen Bewegung in eine Kraft zum Antreiben jenes Auswurfbewegungsmittels, wobei jene ersten Mittel genügend Kraft bereitstellen, um jenem beweglichen Abstreifring zu ermöglichen, jenen Gegenstand (14) von jener Formoberfläche jenes Formkernes (10) loszubrechen; und
- zweite Mittel zum Antreiben jenes Auswurfbewegungsmittels, wobei jene zweiten Mittel genügend Kraft bereitstellen, um es jenem beweglichen Abstreifring zu ermöglichen, den Auswurf jenes Gegenstandes zu beenden, nachdem jener Gegenstand von jenem Formkern losgebrochen ist.

9. Vorrichtung nach Anspruch 8, wobei jenes erste Mittel einen mit jener weiblichen Form (11) verbundenen Nocken (154) sowie einen mit jenem Auswurfbewegungsmittel verbundenen Nockenstösselmechanismus (156) aufweist, wobei jener Nocken so ausgestaltet ist, dass er sich relativ zu jenem Nockenstösselmechanismus bewegt und jenen Nockenstösselmechanismus zum Antreiben jenes Auswurfbewegungsmittels während der Trennung jener weiblichen und männlichen Formen antreibt.

10. Vorrichtung nach Anspruch 9, wobei jenes Auswurfbewegungsmittel eine Zahnstange (64) und eine Kammwalze (52) umfasst, wobei jene Zahnstange an einem Ende mit jenem Nockenstösselmechanismus (156) und an einem anderen Ende mit jener Kammwalze (52) verbunden ist, wobei jene Kammwalze in Eingriff mit jenem beweglichen Abstreifring (36) steht, wobei jene Kammwalze mit jenem Abstreifring zur Auslösung der Rotation jenes Abstreifringes in Eingriff steht.

11. Vorrichtung nach Anspruch 9 oder 10, wobei jener Nockenstösselmechanismus (156) so ausgestaltet ist, dass er ein Element jenes Auswurfbewegungsmittels in eine erste Richtung bewegt und jenes zweite Mittel so ausgestaltet ist, dass es jenes Element in jene erste Richtung im wesentlichen nachfolgend zu jenem Nockenstösselmechanismus bewegt, und wobei jener Nocken sich in einer Richtung erstreckt, welche jene erste Richtung quert, wobei jener Stössel eine sich zu einer Spitze (160) erstreckende geneigte Oberfläche (157) aufweist, wobei jener Nockenstösselmechanismus so angepasst ist, dass er jenem Nocken zu jener Spitze folgt.

12. Vorrichtung nach Anspruch 11, wobei jener Gegenstand (14) von jenem Formkern gelöst wird, wenn jener Nockenstösselmechanismus (156) jene Spitze (160) erreicht, wobei jenes zweite Mittel so angepasst ist, dass es zumindest dann, wenn jener Nockenstösselmechanismus jene Spitze erreicht, den Abstreifring (36) antreibt, um den Auswurf jenes Gegenstandes abzuschliessen.

13. Vorrichtung nach Anspruch 11 oder 12, wobei jenes zweite Mittel ein Zylinder (150) mit einer darin beweglichen Zylinderstange (70) ist, wobei jene Zylinderstange mit jenem Nockenstösselmechanismus verbunden und mit diesem ausgerichtet und in jener ersten Richtung angeordnet und beweglich ist, wobei jener Zylinder in jener zweiten Formhälfte angeordnet ist.

14. Vorrichtung nach Anspruch 2, umfassend einen beweglichen Abstreifring und einen mit einer Zahnstange verbundenen und von dieser beabstandeten Nocken, wobei eine axiale Bewegung des Entfernungsmittels den Kontakt zwischen dem Abstreifring und dem Formkern vor der Rotation des Abstreifringes oder des Formkernes aufhebt.

15. Vorrichtung nach Anspruch 2, wobei die Stellung des Entfernungsmittels das Schliessen der Form weder einschränkt noch verhindert.

16. Vorrichtung nach Anspruch 2, wobei der Nocken kein mechanischer Keil ist, der eine axiale Bewegung des Entfernungsmittels erzwingt.

17. Vorrichtung nach Anspruch 2, wobei jenes erste Mittel zumindest einen Kolben zusätzlich zu jenem zweiten Mittel aufweist.

## Revendications

1. Procédé de formation d'un article (14) en matière plastique moulée à surface extérieure en utilisant un appareil comprenant:
- un moule femelle (11) qui comporte une surface (13) de moule pour la formation de la surface extérieure dudit article en matière plastique moulée;
- un noyau (10) de moule qui comporte une surface externe (24) de noyau qui coopère avec ledit moule femelle pour former entre eux un moule, ledit moule pouvant être dans une position fermée et une position ouverte de moule, ledit noyau de moule et ledit moule femelle formant une cavité (12) de moule dans la position fermée du moule;
- un moyen (32) associé au moule femelle (11) pour injecter une matière plastique dans ladite cavité (12) de moule;
- un moyen (34) destiné à espacer l'un de l'autre ledit moule femelle (11) et ledit noyau (10) de moule pour espacer le moule femelle de l'article moulé et former une position ouverte de moule; et
- un moyen destiné à enlever du noyau moulé (10) l'article moulé (14) en dévissant l'article du noyau, le moyen de dévissage étant déplacé d'une position arrière, dans la position fermée du moule, vers une position avant, dans la position ouverte du moule, et restaurés ensuite à la position arrière,
caractérisé en ce que
le moyen de dévissage est restauré à la position arrière par un moyen d'embrayage (60), sans rotation dudit moyen de dévissage.

2. Appareil de formation d'un article (14) en matière plastique moulée, à surface extérieure, et d'éjection de l'article moulé qui comprend:
- un moule femelle (11) qui comporte une surface (13) de moule pour la formation de la surface extérieure dudit article en matière plastique moulée;
- un noyau (10) de moule qui comporte une surface externe (24) de noyau qui coopère avec ledit moule femelle pour former entre eux un moule, ledit moule pouvant être dans une position fermée et une position ouverte de moule, ledit noyau de moule et ledit moule femelle formant une cavité (12) de moule dans la position fermée du moule;
- un moyen (32) associé au moule femelle (11) pour injecter une matière plastique dans ladite cavité (12) de moule;
- un moyen (34) destiné à espacer l'un de l'autre ledit moule femelle (11) et ledit noyau (10) de moule pour espacer le moule femelle de l'article moulé et former une position ouverte de moule; et
- un moyen destiné à enlever du noyau moulé (10) l'article moulé (14) en dévissant l'article du noyau, le moyen de dévissage étant déplacé d'une position arrière, dans la position fermée du moule, vers une position avant, dans la position ouverte du moule, et restaurés ensuite à la position arrière, ledit moyen d'enlèvement incluant:
- (1) une bague dévêtisseuse mobile, rotative (36), assemblée au-dessus d'une partie de la surface externe (24) de noyau, qui peut être dans une position arrière dans la position fermée du moule et dans une position avant dans la position ouverte du moule, ladite bague dévêtisseuse (36) étant en relation de contact avec ledit article fileté (14) dans la position ouverte du moule, et un moyen de rotation de la bague dévêtisseuse (36) à partir de sa position avant; ou
- (2) une came (74) connectée à une crémaillère (64) et espacée de celle-ci, la came et la crémaillère intervenant pour se déplacer ensemble tout en permettant encore un déplacement axial limité du moyen d'enlèvement, indépendamment de la course de ladite came et de ladite crémaillère; et/ou
- (3) un moyen (34) destiné à faire tourner le noyau et à enlever ainsi du noyau l'article fileté par rotation du noyau, un moyen de déplacement d'éjection pour transmettre au noyau une puissance de rotation, ledit moyen de déplacement d'éjection étant connecté audit noyau et étant positionné adjacent audit noyau, un moyen de source initiale pour communiquer une puissance audit moyen de déplacement d'éjection, ledit moyen de source initiale communiquant une puissance suffisante pour permettre audit noyau d'arracher de force de la surface de moule du noyau de moule ledit article, et un moyen de source secondaire, ledit moyen de source secondaire communiquant une puissance suffisante pour permettre audit noyau de finir l'éjection dudit article lorsque l'article a été arraché de force du noyau de moule;
caractérisé en ce que
- ledit moyen destiné à enlever du noyau (10) de moule ledit article moulé (14) par dévissage inclut un moyen d'embrayage (60) pour restaurer à la position arrière le moyen de dévissage, sans rotation dudit moyen de dévissage.

3. Appareil selon la revendication 2, dans lequel ledit article (14) comporte une surface externe et une surface interne filetée (18) et le moyen (34) d'espacement intervient pour déplacer le moule femelle en ligne droite pour l'éloigner du noyau (10) de moule et de l'article qu'il porte.

4. Appareil selon une des revendications 2 ou 3, dans lequel le noyau (10) est stationnaire et inclut des canaux de refroidissement (26) pourvus de moyens (28) d'introduction d'un liquide de refroidissement dans lesdits canaux de refroidissement.

5. Appareil selon l'une des revendications 2 à 4, dans lequel ledit moyen de rotation de la bague dévêtisseuse (36) inclut une crémaillère (64), qui entraîne un pignon (52) qui entraîne lui-même la bague dévêtisseuse (36), et un moyen de déplacement à va-et-vient de la crémaillère, grâce à quoi la bague dévêtisseuse est tournée de sa position arrière vers sa position avant et se déplace axialement par rapport au noyau pour enlever l'article hors du noyau et est ramenée vers sa position arrière.

6. Appareil selon la revendication 5, dans lequel ledit moyen de rotation de la bague dévêtisseuse (36) inclut un embrayage (60) assemblé au-dessus du pignon (52), et une came (74) sur la crémaillère (64).

7. Appareil selon la revendication 6, dans lequel le pignon (52) est assemblé dans des plaques d'appui avant et arrière (38, 40), le pignon entraînant la bague dévêtisseuse (36), l'appareil incluant aussi une plaque fixe (39) de noyau adjacente aux plaques d'appui avant et arrière et un moyen de déplacement des plaques d'appui pour les éloigner et les rapprocher de la plaque fixe de noyau, et dans lequel la came (74) comporte une face (84) de came inclinée selon un certain angle et les plaques d'appui s'éloignent de la plaque de noyau selon le rapport permis par l'angle de la face de came.

8. Appareil selon l'une des revendications 2 à 7, qui inclut:
- un moyen de déplacement d'éjection pour transmettre une puissance de rotation à ladite bague dévêtisseuse mobile (36) et provoquer son déplacement, ledit moyen de mouvement d'éjection étant connecté à ladite bague dévêtisseuse mobile et étant positionné adjacent à ladite bague dévêtisseuse mobile;
- un moyen de source initiale pour convertir en une puissance ledit mouvement relatif afin de communiquer une puissance audit moyen de déplacement d'éjection, ledit moyen de source initiale communiquant une puissance suffisante pour permettre à ladite bague dévêtisseuse mobile d'arracher de force, de ladite surface de moule dudit noyau (10) de moule, ledit article (14); et
- un moyen de source secondaire pour communiquer audit moyen de déplacement d'éjection une puissance suffisante pour permettre à ladite bague dévêtisseuse mobile de finir l'éjection dudit article, lorsque l'article a été arraché de force dudit noyau de moule.

9. Appareil selon la revendication 8 dans lequel ledit moyen de source initiale comprend une came (154) connectée audit moule femelle (11) et un mécanisme (156) de contre-came, connecté audit moyen de déplacement d'éjection, ladite came étant apte à se déplacer par rapport audit mécanisme de contre-came et à communiquer audit mécanisme de contre-came un mouvement pour activer ledit moyen de déplacement d'éjection pendant la séparation desdits moules femelle et mâle.

10. Appareil selon la revendication 9, dans lequel ledit moyen de déplacement d'éjection comprend une crémaillère (64) et un pignon (52), ladite crémaillère étant connectée à une première extrémité audit mécanisme (156) de contre-came et à une autre extrémité audit pignon (52), ledit pignon étant engrené avec ladite bague dévêtisseuse mobile (36), ledit pignon s'engrenant avec ladite bague dévêtisseuse pour induire une rotation de ladite bague dévêtisseuse.

11. Appareil selon la revendication 9 ou 10 dans lequel ledit mécanisme (156) de contre-came est apte à déplacer un élément dudit moyen de déplacement d'éjection dans un premier sens et ledit moyen de source secondaire est apte à déplacer ledit élément dans ledit premier sens sensiblement après le mécanisme de contre-came, et dans lequel ladite came s'étend dans une direction qui est transversale audit premier sens, ladite came comportant une surface inclinée (157) qui s'étend vers une maximum (160), ledit mécanisme de contre-came étant apte à suivre ladite came vers ledit maximum.

12. Appareil selon la revendication 11 dans lequel ledit article (14) devient détaché dudit noyau de moule lorsque ledit mécanisme (156) de contre-came atteint ledit maximums (160), ledit moyen de source secondaire étant apte à activer au moins lorsque ledit mécanisme de contre-came atteint ledit maximum pour permettre à la bague dévêtisseuse (36) d'achever l'éjection dudit article.

13. Appareil selon la revendication 11 ou 12 dans lequel ledit moyen de source secondaire est un vérin (150) qui comprend une tige (70) de vérin qui y est mobile, ladite tige de vérin étant connectée audit mécanisme de contre-came et en alignement avec lui et étant positionnée et mobile dans ledit premier sens, ledit vérin étant positionné dans ladite deuxième moitié de moule.

14. Appareil selon la revendication 2 qui inclut une bague dévêtisseuse mobile et une came connectée à une crémaillère et espacée de celle-ci, dans lequel un déplacement axial du moyen d'enlèvement interrompt tout contact entre la bague dévêtisseuse et le noyau de moule avant rotation d'au moins, soit la bague dévêtisseuse, soit le noyau de moule.

15. Appareil selon la revendication 2, dans lequel la position du moyen d'enlèvement ne limite ni n'empêche une fermeture du moule.

16. Appareil selon la revendication 2 dans lequel la came n'est pas une cale mécanique qui provoque à force un déplacement axial du moyen d'enlèvement.

17. Appareil selon la revendication 2 dans lequel ledit moyen de source initiale comprend au moins un piston en plus dudit moyen de source secondaire.
